# EUROPEAN PATENT APPLICATION

(11) **EP 4 604 272 A1**
(43) Date of publication of application: **20.08.2025**
(21) Application number: 23918157.1
(22) Date of filing: 21.04.2023
(51) Int. Cl.: H01M 10/6556, H01M 10/6568, H01M 10/613, H01M 10/625, H01M 10/647

(54) **HEAT EXCHANGE COMPONENT, BOX BODY, BATTERY, AND ELECTRIC DEVICE**

(30) Priority: 28.01.2023 CN 202320082535 U
(71) Applicant: Contemporary Amperex Technology (Hong Kong) Limited, Central (HK)
(72) Inventor: WANG, Wenli, Ningde, Fujian 352100 (CN); HUANG, Xiaoteng, Ningde, Fujian 352100 (CN); TANG, Yu, Ningde, Fujian 352100 (CN); YANG, Haiqi, Ningde, Fujian 352100 (CN); XU, Chenyi, Ningde, Fujian 352100 (CN)
(74) Representative: Ran, Handong
(86) International application number: PCT/CN2023/089815
(87) International publication number: WO 2024/156155

(57) **Abstract**

A heat exchange component, a box, a battery, and an electrical apparatus are provided. The heat exchange component applied to the battery includes a body. The body includes a plurality of chambers extending through the body in a second direction, the plurality of chambers being arranged along a first direction. The plurality of chambers comprise an edge chamber located at an end of the body in the first direction, and a non-edge chamber located at a side of the edge chamber toward a center of the body. A cross-sectional area of the edge chamber perpendicular to the second direction is smaller than that of the non-edge chamber perpendicular to the second direction, so as to reduce the capacity of a heat exchange medium in the edge chamber, thereby mitigating the problem that the reliability of the battery is reduced by short circuits in the battery caused by condensation of air moisture into droplets due to the excessively low temperature of the body at the edge chamber.

## Description

### CROSS REFERENCE TO RELATED APPLICATION

The present application claims priority to Chinese Patent Application No. 202320082535.2, entitled "HEAT EXCHANGE COMPONENT, BOX, BATTERY, AND ELECTRICAL APPARATUS" filed on January 28, 2023, which is incorporated herein by reference in its entirety.

### TECHNICAL FIELD

The present application relates to the field of batteries, in particular to a heat exchange component, a box, a battery, and an electrical apparatus.

### BACKGROUND

Energy conservation and emission reduction are the key to sustainable development of the automotive industry. Electric vehicles have become an important part of the sustainable development of the automotive industry due to their advantages in energy conservation and environmental protection. For the electric vehicles, battery technology is an important factor related to their development.

In the development of battery technology, in addition to improving the use performance of batteries, how to improve the reliability of batteries is also a non-negligible issue.

### SUMMARY

The present application provides a heat exchange component, a box, a battery, and an electrical apparatus, where the reliability of the battery can be improved.

In a first aspect, the present application provides a heat exchange component applied to a battery. The heat exchange component includes: a body including a plurality of chambers extending through the body in a second direction, the plurality of chambers being arranged along a first direction, where the plurality of chambers comprise an edge chamber located at an end of the body in the first direction, and a non-edge chamber located at a side of the edge chamber toward a center of the body, a cross-sectional area of the edge chamber perpendicular to the second direction is smaller than that of the non-edge chamber perpendicular to the second direction, and the first direction intersects with the second direction.

In the solution of the embodiments of the present application, the heat exchange component includes a body that includes a plurality of chambers extending through the body in a second direction, the plurality of chambers being arranged in a first direction, where the plurality of chambers comprise an edge chamber located at an end of the body in the first direction, and a non-edge chamber located at a side of the edge chamber toward a center of the body, and the cross-sectional area of the edge chamber perpendicular to the second direction is smaller than that of the non-edge chamber perpendicular to the second direction to reduce the capacity of a heat exchange medium in the edge chamber, thereby mitigating the problem that the reliability of a battery is reduced by short circuits in the battery caused by condensation of air moisture into droplets due to the excessively low temperature of the body at the edge chamber.

In some embodiments, the cross-sectional area of the edge chamber perpendicular to the second direction is 20% to 70% of the cross-sectional area of the non-edge chamber perpendicular to the second direction.

In the technical solution of the embodiments of the present application, the cross-sectional area of the edge chamber perpendicular to the second direction is 20% to 70% of the cross-sectional area of the non-edge chamber perpendicular to the second direction, so as to mitigate the problem of inadequate heat exchange performance of the heat exchange component due to the excessively small edge chamber, and to also mitigate the problem that the reliability of the battery is reduced by short circuits in the battery caused by a large amount of condensate water due to the excessively large edge chamber and the excessively low temperature of the body at the edge position.

In some embodiments, the body includes a first wall portion and a second wall portion, the second wall portion encloses the non-edge chamber, the first wall portion and a portion of the second wall portion enclose the edge chamber, the first wall portion includes a side wall and two bottom walls extending in the first direction and connecting the side wall and the second wall portion, and the wall thickness of the side wall is greater than that of the second wall portion.

In the technical solution of the embodiments of the present application, the body includes a first wall portion and a second wall portion, the second wall portion encloses the non-edge chamber, the first wall portion and a portion of the second wall portion enclose the edge chamber, the first wall portion includes a side wall and two bottom walls extending in the first direction and connecting the side wall and the second wall portion, and the wall thickness of the side wall is greater than that of the second wall portion, where the wall thickness of the side wall is increased to enhance the thermal resistance of the body at the edge chamber, thereby mitigating the problem that the reliability of the battery is reduced by short circuits in the battery caused by the condensation of air moisture due to the excessively low temperature of the body at the edge position. In addition, a wall thickness of the side wall is greater than that of the second wall portion, which also increases the structural strength of the body and reduces the risk of deformation of the heat exchange component squeezed by battery cells.

In some embodiments, the wall thickness of the side wall is greater than or equal to 0.3 mm.

In the technical solution of the embodiments of the present application, the wall thickness of the first wall portion is greater than or equal to 0.3 mm, so as to mitigate the problem that the reliability of the battery is reduced by short circuits in the battery caused by the condensation of air moisture due to the excessively low thermal resistance of the first wall portion having an excessively low wall thickness and the excessively low temperature of the body at the edge position.

In some embodiments, at least a portion of the first wall portion is provided with a heat-resistance layer for increasing the thermal resistance of the chambers.

In the technical solution of the embodiments of the present application, at least a portion of the first wall portion is provided with the heat-resistance layer to enhance the thermal resistance of the body at the edge chamber, thereby mitigating the problem that the reliability of the battery is reduced by short circuits in the battery caused by the condensation of air moisture due to the excessively low temperature of the body at the edge position.

In some embodiments, the heat-resistance layer covers the first wall portion and the second wall portion.

In the technical solution of the embodiments of the present application, the heat-resistance layer covers the first wall portion and the second wall portion, which reduces process difficulty and enhances the thermal resistance of the body, thereby mitigating the problem that the reliability of the battery is reduced by short circuits in the battery caused by the condensation of air moisture due to the excessively low temperature of the body at the edge position.

In some embodiments, the heat exchange component further includes fluid-collecting devices, wherein two of the fluid-collecting devices are mounted at two ends of the body in the second direction, and the fluid-collecting devices are in communication with at least a portion of the chambers in the second direction, allowing the heat exchange medium to flow into and out of the chambers through the fluid-collecting devices.

In the technical solution of the embodiments of the present application, the heat exchange component further includes fluid-collecting devices mounted at two ends of the body in the second direction respectively, and the fluid-collecting devices are in communication with at least some of the chambers in the second direction, where the fluid-collecting devices play a collecting role to facilitate the flow of the heat exchange medium into and out of the chambers, thereby improving the practicality of the heat exchange component.

In a second aspect, an embodiment of the present application provides a box, including a heat exchange component as in the embodiments of the first aspect.

In a third aspect, an embodiment of the present application provides a battery, including a box and battery cells in the embodiment of the second aspect, where the battery cells are accommodated in the box, and the heat exchange component is in contact with the battery cells to exchange heat with the battery cells.

In a fourth aspect, an embodiment of the present application provides an electrical apparatus, including a battery as in the embodiment of the third aspect, the battery being used to provide electrical energy.

### BRIEF DESCRIPTION OF THE DRAWINGS

Other advantages and benefits will become apparent to those skilled in the art by reading detailed description of the preferred implementations below. The drawings are only intended for illustrating the preferred implementations and are not considered as a limitation on the present application. Throughout the drawings, the same reference numerals represent the same components. In the drawings:
FIG. 1 is a schematic structural view of a vehicle provided in an embodiment of the present application;
FIG. 2 is an exploded view of a battery provided in an embodiment of the present application;
FIG. 3 is a schematic structural view of a battery module in the battery provided in an embodiment of the present application;
FIG. 4 is a schematic structural view of a heat exchange component provided in an embodiment of the present application;
FIG. 5 is an enlarged structural view of the position A in FIG. 4;
FIG. 6 is an axonometric view of the heat exchange component provided in an embodiment of the present application; and
FIG. 7 is a schematic structural view of the heat exchange component provided in another embodiment of the present application.

Reference numerals in specific implementations are as follows:
1. Vehicle; 2. Battery; 101. Motor; 102. Controller; 202. Box; 2021, First box portion; 2022, Second box portion; 201. Battery module; 3. Battery cell;
4. Heat exchange component; 5. Body; 51. Chamber; 511. Edge chamber; 512. Non-edge chamber; 52. First wall portion; 53. Second wall portion; 521. Side wall; 522. Bottom wall; 531. First wall; 532. Second wall; 54. Heat-resistance layer; 55. Fluid-collecting device.

### DETAILED DESCRIPTION

The embodiments of the technical solutions of the present application will be described in detail below with reference to the drawings. The following embodiments are only used for illustrating the technical solutions of the present application more clearly, and therefore are only examples and cannot be used for limiting the protection scope of the present application.

It should be noted that, unless otherwise specified, the technical or scientific terms used in the embodiments of the present application shall have the ordinary meaning understood by those skilled in the art to which the embodiments of the present application belong.

In the description of the embodiments of the present application, an orientation or positional relationship indicated by the technical term "center", "longitudinal", "transverse", "length", "width", "thickness", "upper", "lower", "front", "back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In addition, the technical terms "first", "second", etc. are only for the sake of description, and cannot be understood as indicating or implying the relative importance or implicitly indicating the number of technical features indicated. In the description of the embodiments of the present application, the meaning of "a plurality of" is two or more, unless otherwise specifically defined.

In the description of the embodiments of the present application, unless otherwise explicitly specified and defined, the technical terms "mounted", "connected", "connection", "fixed", etc. should be understood in a broad sense, for example, the "connection" may be fixed connection, detachable connection, integration, mechanical connection, electrical connection, direct connection, indirect connection via an intermediate medium, internal communication between two elements, or interaction between two elements. Those skilled in the art may appreciate the specific meanings of the foregoing terms in the embodiments of the present application according to specific circumstances.

In the description of the embodiments of the present application, unless otherwise expressly specified and defined, a first feature "above" or "below" a second feature indicates that the first feature and the second feature are in direct contact, or are in indirect contact through an intermediate medium. Moreover, the first feature "on", "above", and "up" the second feature may be the first feature right above or obliquely above the second feature, or merely indicates that the level of the first feature is higher than that of the second feature. The first feature "below", "under", and "down" the second feature may be the first feature right below or obliquely below the second feature, or merely indicates that the level of the first feature is lower than that of the second feature.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of the application fields of power batteries, their market demand is also increasing.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cell.

Energy conservation and emission reduction are the key to sustainable development of the automotive industry. Electric vehicles have become an important part of the sustainable development of the automotive industry due to their advantages in energy conservation and environmental protection. For the electric vehicles, battery technology is an important factor related to their development. In the development of battery technology, in addition to improving the use performance of batteries, how to improve the reliability of batteries is also a non-negligible issue.

The applicant has noticed that some batteries are short-circuited during use, especially in humid and hot environments where short circuits occur more frequently.

In order to mitigate this phenomenon, the applicant found by disassembly and research on a battery that the battery includes a heat exchange component used for assisting in the heat dissipation of battery cells, the heat exchange component is filled with a low-temperature medium to ensure that the surface temperature of the heat exchange component is lower than the environmental temperature, then water vapor in the environment condenses into droplets on the surface of the heat exchange component, and the droplets drip to cause a short circuit inside the battery. The inventor found by further research that all condensate water mostly occurs at edge positions of two sides of the heat exchange component due to large contact area between edges of the heat exchange component and air moisture.

Based on the above problems found by the inventor, the inventor made improvements to the heat exchange component as follows. The heat exchange component includes a body that includes a plurality of chambers penetrating therethrough in a second direction, and the plurality of chambers being arranged in a first direction, where the plurality of chambers comprise an edge chamber located at an end of the body in the first direction, and a non-edge chamber located at a side of the edge chamber toward a center of the body, and the cross-sectional area of the edge chamber perpendicular to the second direction is smaller than that of the non-edge chamber perpendicular to the second direction to reduce the capacity of a heat exchange medium in the edge chamber, thereby mitigating the problem that the reliability of a battery is reduced by short circuits in the battery caused by condensation of air moisture into droplets due to the excessively low temperature of the body at the edge chamber.

The technical solutions described in the embodiments of the present application are applicable to an electrical apparatus using the battery.

The electrical apparatus may be a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the electrical apparatus.

It should be understood that the technical solutions described in the embodiments of the present application are not only applicable to the battery and electrical apparatus described above, but also applicable to all batteries including a box and electrical apparatuses using the batteries. However, for the brevity of description, the following embodiments are all described by taking an electric vehicle as an example.

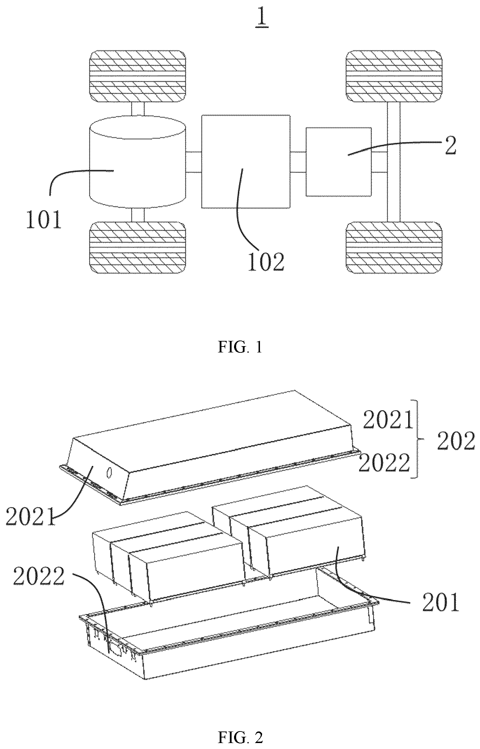

Referring to FIG. 1, FIG. 1 is a schematic structural view of a vehicle 1 provided in some embodiments of the present application. The vehicle 1 may be a fuel-powered vehicle, a gas-powered vehicle, or a new energy vehicle, and the new energy vehicle may be a battery electric vehicle, a hybrid vehicle, an extended-range vehicle, or the like. A battery 2 is disposed inside the vehicle 1, and the battery may be disposed in the bottom, the front, or the rear of the vehicle 1. The battery 2 may be used for supplying power to the vehicle 1. For example, the battery 2 may be used as an operation power supply of the vehicle 1. The vehicle 1 may further include a controller 102 and a motor 101. The controller 102 is configured for controlling the battery to supply power to the motor 101, for example, for a working power demand of the vehicle 1 during startup, navigation, and running.

In some embodiments of the present application, the battery may be used not only as an operation power supply of the vehicle 1, but also as a driving power supply of the vehicle 1 to replace or partially replace fuel or natural gas to provide driving power for the vehicle 1.

In order to meet different power requirements, the battery 2 may include a plurality of battery cells. The battery cells are minimum units that constitute a battery module or a battery pack. The plurality of battery cells may be connected in series and/or in parallel through electrode terminals for various applications. The battery 2 mentioned in the present application includes battery modules or battery packs. The plurality of battery cells may be connected in series, in parallel, or in series and parallel. The series and parallel connection refers to a combination of series connection and parallel connection. In the embodiments of the present application, the plurality of battery cells may be directly combined into a battery pack, or may be first combined into a battery module, and then the battery modules form a battery pack.

FIG. 2 illustrates a schematic structural view of a battery 2 in an embodiment of the present application.

As shown in FIG. 2, the battery includes a box 202 and battery cells (not shown), where the battery cells are accommodated in the box 202.

The box 202 may be of a simple three-dimensional structure such as a single cuboid, cylinder or sphere, or a complex three-dimensional structure formed by combining simple three-dimensional structures such as cuboids, cylinders or spheres. The material of the box 202 may be an alloy material such as aluminum alloy or iron alloy, or a polymer material such as polycarbonate or polyisocyanurate foam plastic, or a composite material of glass fiber and epoxy resin.

The box 202 is for accommodating the battery cells, and the box 202 may have various structures. In some embodiments, the box 202 may include a first box portion 2021 and a second box portion 2022, the first box portion 2021 and the second box portion 2022 are closed to each other, and the first box portion 2021 and the second box portion 2022 jointly confine an accommodating space for accommodating the battery cells 3. The second box portion 2022 may be of a hollow structure with an open end, the first box portion 2021 is of a plate-like structure, and the first box portion 2021 is closed to the open side of the second box portion 2022 to form the box 202 with an accommodating space; or the first box portion 2021 and the second box portion 2022 may be of hollow structures with an open side, and the open side of the first box portion 2021 is closed to the open side of the second box portion 2022 to form the box 202 with an accommodating space. The first box portion 2021 and the second box portion 2022 may be in various shapes, such as cylinder or cuboid.

To improve the sealing property after the first box portion 2021 is connected to the second box portion 2022, a sealing member such as a sealant or a sealing ring may be disposed between the first box portion 2021 and the second box portion 2022.

Assuming that the first box portion 2021 is closed to the top of the second box portion 2022, the first box portion 2021 may be referred to as an upper box cover, and the second box portion 2022 may be referred to as a lower box cover.

There may be one or more battery cells in the battery 2. If there is a plurality of battery cells, the plurality of battery cells may be connected in series, in parallel, or in series and parallel. The series-parallel connection refers to a combination of series connection and parallel connection in the plurality of battery cells. The plurality of battery cells may be directly connected in series, in parallel, or in series and parallel together, and then the whole formed by the plurality of battery cells is accommodated in the box 202. Alternatively, the plurality of battery cells may be first connected in series, in parallel, or in series and parallel to form a battery module 201, and then a plurality of battery modules 201 are connected in series, in parallel, or in series and parallel to form a whole accommodated in the box 202.

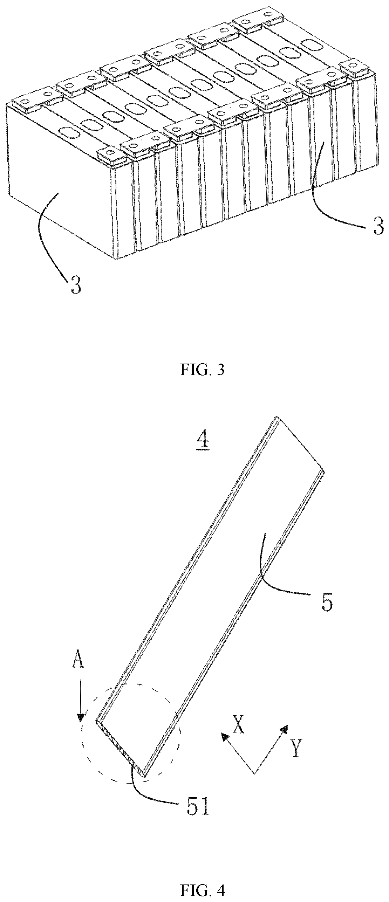

FIG. 3 illustrates a schematic structural view of a battery module 201 in an embodiment of the present application.

In some embodiments, as shown in FIG. 2 and FIG. 3, this is a plurality of battery cells 3, and the plurality of battery cells 3 are first connected in series, in parallel, or in series and parallel to form a battery module 201. A plurality of battery modules 201 are then connected in series, in parallel, or in series and parallel to form a whole accommodated in the box 202.

The plurality of battery cells 3 in the battery module 201 may be electrically connected through a busbar component to implement the parallel, series, or series and parallel connection of the plurality of battery cells 3 in the battery module 201.

In the present application, the battery cells 3 may include lithium-ion battery cells 3, sodium-ion battery cells 3, magnesium-ion battery cells 3, etc., which are not limited by the embodiments of the present application. The battery cells 3 may be cylindrical, flat, cuboid, or in other shapes, which is also not limited by the embodiments of the present application. The battery cells 3 are generally divided into three types according to ways of packaging: cylindrical battery cells 3, square battery cells 3 and soft package battery cells 3, which are also not limited by the embodiments of the present application. However, for the sake of simplicity, the following embodiments are illustrated by taking the square battery cells 3 as an example.

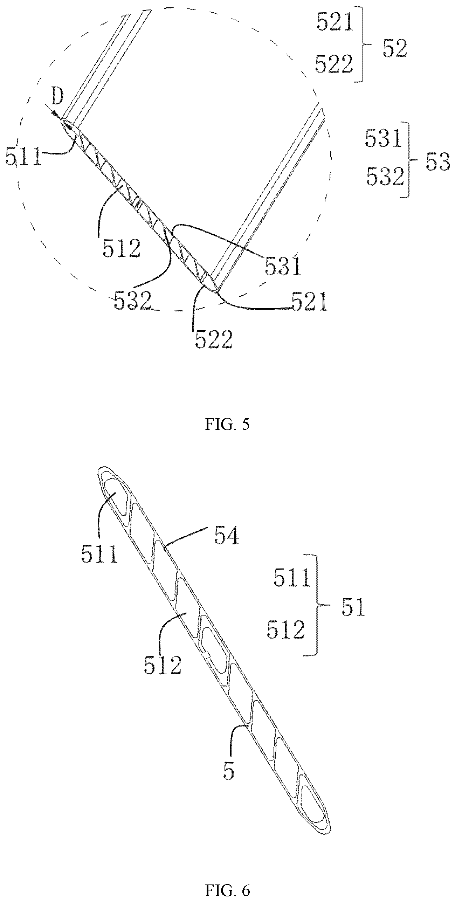

Referring to FIG. 4 and FIG. 5, FIG. 4 is a schematic structural view of a heat exchange component provided in an embodiment of the present application, and FIG. 5 is an enlarged structural view of the position A in FIG. 4.

In a first aspect, as shown in FIG. 4 and FIG. 5, the present application provides a heat exchange component 4 applied to a battery, the heat exchange component 4 includes a body 5 that includes a plurality of chambers 51 penetrating through the body 5 in a second direction Y, and the plurality of chambers 51 being arranged in a first direction X, where the plurality of chambers 51 comprise an edge chamber 511 located at an end of the body 5 in the first direction X, and a non-edge chamber 512 located at a side of the edge chamber 511 toward a center of the body 5, a cross-sectional area of the edge chamber 511 perpendicular to the second direction Y is smaller than that of the non-edge chamber 512 perpendicular to the second direction Y, and the first direction X intersects with the second direction Y.

Optionally, the body 5 is made of a metal material such as copper, iron, aluminum, stainless steel, or aluminum alloy, so that the body 5 has certain compressive strength to cope with squeeze by expansion of battery cells.

Optionally, the number of the chambers 51 is not less than 3. Exemplarily, the number of the chambers 51 is 3, 5, or 10.

Optionally, the chambers 51 at two ends of the body 5 in the first direction X are edge chambers 511, and the chambers 51 except the edge chambers 511 are non-edge chambers 512.

In a usage state, the outer wall of the body 5 in the position of the non-edge chambers 512 abuts against the battery cells, and the contact area between air moisture and the outer wall of the body 5 in the position of the edge chamber 511 is larger than that between air moisture and the outer wall of the body 5 in the position of the non-edge chambers 512, so that moisture in air is prone to condensation into droplets on the body 5in the corresponding positions of the edge chambers 511 upon cooling. The usage state refers to the state in which at least one chamber 51 is injected with a low-temperature medium. The low-temperature medium may be water, alcohol, ethylene glycol, etc. The low-temperature medium flows in the heat exchange component, and the heat exchange component 4 can cool down the battery cells through heat transfer.

The temperature of the body 5 at the edge chamber 511 and the lowest temperature of the body 5 at the non-edge chamber 512 refer to the temperature measured on the outer wall of the body 5 at the edge chamber 511 and the lowest temperature measured on the outer wall of the body 5 at the non-edge chamber 512.

Optionally, in the usage state, the low-temperature medium is introduced into only some of the non-edge chambers 512. Further, in the usage state, the low-temperature medium is introduced into the two non-edge chambers 512 closest to the two edge chambers 511 in the first direction X.

Optionally, the edge chambers 511 and the non-edge chambers 512 can be designed to be different when the chambers 51 are prepared, or some stoppers can be disposed inside the edge chambers 511 after the chambers 51 are prepared to reduce the volumes of the edge chambers 511. By adjusting the sizes of different stoppers, the volumes of the edge chambers 511 can be precisely adjusted, so as to balance the relationship between the heat exchange capacity of the heat exchange component 4 and short circuits in the battery caused by condensate water in the heat exchange component 4.

In the solution of the embodiments of the present application, the heat exchange component 4 includes a body 5 that includes a plurality of chambers 51 penetrating through the body 5 in a second direction Y, and the plurality of chambers 51 being arranged in a first direction X, where the plurality of chambers 51 comprise an edge chamber 511 located at an end of the body 5 in the first direction X, and a non-edge chamber 512 located at a side of the edge chamber 511 toward a center of the body 5, the cross-sectional area of the edge chamber 511 perpendicular to the second direction Y is smaller than that of the non-edge chamber 512 perpendicular to the second direction Y to reduce the capacity of a heat exchange medium in the edge chamber 511, thereby mitigating the problem that the reliability of a battery is reduced by short circuits in the battery caused by condensation of air moisture into droplets due to the excessively low temperature of the body 5 at the edge chamber 511.

In some embodiments, as shown in FIG. 4 and FIG. 5, the cross-sectional area of the edge chamber 511 perpendicular to the second direction Y is 20% to 70% of the cross-sectional area of the non-edge chamber 512 perpendicular to the second direction.

Exemplarily, the cross-sectional area of the edge chamber 511 perpendicular to the second direction Y is 30%, 50%, or 70% of the cross-sectional area of the non-edge chamber 512 perpendicular to the second direction Y.

In these embodiments, the cross-sectional area of the edge chamber 511 perpendicular to the second direction Y is 20% to 70% of the cross-sectional area of the non-edge chamber 512 perpendicular to the second direction Y, so as to mitigate the problem of inadequate heat exchange performance of the heat exchange component 4 due to the excessively small edge chamber 511, and to also mitigate the problem that the reliability of the battery is reduced by short circuits in the battery caused by a large amount of condensate water due to the excessively large edge chamber 511 and the excessively low temperature of the body 5 at the edge position.

In some embodiments, as shown in FIG. 4 and FIG. 5, the body 5 includes a first wall portion 52 and a second wall portion 53, the second wall portion 53 encloses the non-edge chamber 512, the first wall portion 52 and a portion of the second wall portion 53 enclose the edge chamber 511, the first wall portion 52 includes a side wall 521 and two bottom walls 522 extending in the first direction X and connecting the side wall 521 and the second wall portion 53, and the wall thickness of the side wall 521 is greater than that of the second wall portion 53.

The second wall portion 53 includes first walls 531 located at two ends of the non-edge chamber 512 in the thickness direction of the body 5, and second walls 532 each located between two adjacent chambers 51 in the first direction X. The first walls 531 and the second walls 532 jointly enclose the non-edge chamber 512.

Optionally, the side wall 521 is U-shaped.

Optionally, the wall thickness of the entire first wall portion 52 is greater than that of the second wall portion 53 to reduce the processing difficulty of the first wall portion 52.

Optionally, a portion of the side wall 521 protrudes towards the chambers 51 to reduce the volume of the edge chamber 511 and increase the temperature of the body 5 at the edge position. Alternatively, a portion of the side wall 521 protrudes away from the chambers 51, and the cross-sectional area of the edge chamber 511 perpendicular to the second direction Y is the same as that of the non-edge chamber 512 perpendicular to the second direction Y, which can increase the structural strength of the body 5 at the edge chamber 511.

In the technical solution of the embodiments of the present application, the body 5 includes a first wall portion 52 and a second wall portion 53, the second wall portion 53 encloses the non-edge chamber 511, the first wall portion 52 and a portion of the second wall portion 53 enclose the edge chamber 511, the first wall portion 52 includes a side wall 521 and two bottom walls 522 extending in the first direction X and connecting the side wall 521 and the second wall portion 53, and the wall thickness of the side wall 521 is greater than that of the second wall portion 53, where the wall thickness of the side wall 521 is increased to enhance the thermal resistance of the body 5 at the edge chamber 511, thereby mitigating the problem that the reliability of the battery is reduced by short circuits in the battery caused by the condensation of air moisture due to the excessively low temperature of the body 5 at the edge position. In addition, the wall thickness of the side wall 521 is greater than that of the second wall portion 53, which also increases the structural strength of the body 5 and reduces the risk of deformation of the heat exchange component 4 squeezed by battery cells.

In some embodiments, as shown in FIG. 5, the wall thickness of the side wall 521 is greater than or equal to 0.3 mm.

Exemplarily, the wall thickness of the side wall 521 is 0.3 mm, 0.4 mm, or 0.45 mm.

In the technical solution of the embodiments of the present application, the wall thickness of the side wall 521 is greater than or equal to 0.3 mm, so as to mitigate the problem that the reliability of the battery is reduced by short circuits in the battery caused by the condensation of air moisture due to the excessively low thermal resistance of the first wall portion 52 having an excessively low wall thickness and the excessively low temperature of the body 5 at the edge position.

Referring to FIG. 6, FIG. 6 is an axonometric view of the heat exchange component provided in an embodiment of the present application.

In some embodiments, as shown in FIG. 5 and FIG. 6, at least a portion of the first wall portion 52 is provided with a heat-resistance layer 54, and the heat-resistance layer 54 is used for increasing the thermal resistance of the chambers 51.

The thermal resistance reflects the ability to prevent heat transfer. In engineering applications of heat transfer, in order to meet the requirements of production processes, sometimes the thermal resistance is decreased to enhance heat transfer; and sometimes the thermal resistance is increased to suppress heat transfer.

Optionally, the heat-resistance layer 54 is a foamed plastic, superfine glass wool, high silica cotton or polyimide film.

Optionally, the heat-resistance layer 54 may be bonded to the first wall portion 52 and/or the second wall portion 53 by adhesion, plating, or spraying.

In the technical solutions of the embodiments of the present application, at least a portion of the first wall portion 52 is provided with the heat-resistance layer 54 to enhance the thermal resistance of the body 5 at the edge chamber 511, thereby mitigating the problem that the reliability of the battery is reduced by short circuits in the battery caused by the condensation of air moisture due to the excessively low temperature of the body 5 at the edge position.

In some embodiments, as shown in FIG. 5 and FIG. 6, the heat-resistance layer 54 covers the first wall portion 52 and the second wall portion 53.

Optionally, the heat-resistance layer 54 may be made of a thermal insulation material or a thermal insulation fireproof material. The heat-resistance layer covers the first wall portion 52 and the second wall portion 53, which can further improve the internal insulation and internal fireproof capabilities of the battery to improve the reliability of the battery.

When measuring the temperature of the body at the edge chamber 511 and the non-edge chamber 512, the temperature of the heat-resistance layer 54 there should be measured.

In the technical solutions of the embodiments of the present application, the heat-resistance layer 54 covers the first wall portion 52 and the second wall portion 53, which reduces process difficulty and enhances the thermal resistance of the body 5, thereby mitigating the problem that the reliability of the battery is reduced by short circuits in the battery caused by the condensation of air moisture due to the excessively low temperature of the body 5 at the edge position.

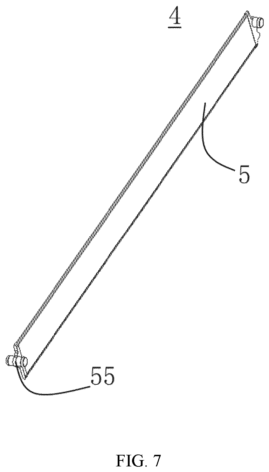

Referring to FIG. 7, FIG. 7 is a schematic structural view of a heat exchange component provided in another embodiment of the present application.

In some embodiments, as shown in FIG. 4 to FIG. 7, the heat exchange component 4 further includes fluid-collecting devices 55, wherein two of the fluid-collecting devices 55 are mounted at two ends of the body 5 in the second direction Y, and the fluid-collecting devices 55 are in communication with at least some of the chambers 51 in the second direction Y, so that the heat exchange medium can flow into and out of the chambers 51 through the fluid-collecting devices 55.

In the technical solutions of the embodiments of the present application, the heat exchange component 4 further includes fluid-collecting devices 55, wherein two of the fluid-collecting devices 55 are mounted at two ends of the body 5 in the second direction Y respectively, and the fluid-collecting devices 55 are in communication with at least some of the chambers 51 in the second direction Y, where the fluid-collecting devices 55 play a collecting role to facilitate the flow of the heat exchange medium into and out of the chambers 51, thereby improving the practicality of the heat exchange component 4.

In a second aspect, an embodiment of the present application provides a box, including the heat exchange component as in the embodiments of the first aspect.

The box provided according to the embodiments of the present application, including the heat exchange component provided in any of the above embodiments, has the same technical effects, which will not be repeated here.

In a third aspect, an embodiment of the present application provides a battery, including the box in the embodiment of the second aspect and battery cells, where the battery cells are accommodated in the box, and the heat exchange component is in contact with the battery cells to exchange heat with the battery cells.

The battery provided according to the embodiments of the present application, including the box provided in the above embodiments, has the same technical effects, which will not be repeated here.

In a fourth aspect, an embodiment of the present application provides an electrical apparatus, including the battery as in the embodiment of the third aspect, the battery being used for providing electrical energy.

The electrical apparatus provided according to the embodiment of the present application, including the battery provided in the embodiment of the present application, has the same technical effects, which will not be repeated here.

As shown in FIG. 1 to FIG. 7, the present application provides a heat exchange component 4 applied to a battery 2, the heat exchange component 4 includes a body 5 that includes a plurality of chambers 51 penetrating through the body 5 in a second direction Y, and the plurality of chambers 51 being arranged in a first direction X, where the plurality of chambers 51 comprise an edge chamber 511 located at an end of the body 5 in the first direction X, and a non-edge chamber 512 located at a side of the edge chamber 511 toward a center of the body 5, the cross-sectional area of the edge chamber 511 perpendicular to the second direction Y is 20% to 70% of the cross-sectional area of the non-edge chamber 512 perpendicular to the second direction Y, the body 5 includes a first wall portion 52 and a second wall portion 53, the second wall portion 53 encloses the non-edge chamber 512, the first wall portion 52 and a portion of the second wall portion 53 enclose the edge chamber 511, the first wall portion 52 includes a U-shaped side wall 521 and two bottom walls 522 extending in the first direction X and connecting the U-shaped side wall 521 and the second wall portion 53, the wall thickness of the U-shaped side wall 521 is greater than or equal to 0.3 mm, and a heat-resistance layer 54 covers the first wall portion 52 and the second wall portion 53.

In the solution of the embodiments of the present application, the heat exchange component 4 includes a body 5 that includes a plurality of chambers 51 penetrating through the body 5 in a second direction Y, and the plurality of chambers 51 being arranged in a first direction X, where the plurality of chambers 51 comprise an edge chamber 511 located at an end of the body 5 in the first direction X, and a non-edge chamber 512 located at a side of the edge chamber 511 toward a center of the body 5, the cross-sectional area of the edge chamber 511 perpendicular to the second direction Y is smaller than that of the non-edge chamber 512 perpendicular to the second direction Y to reduce the capacity of a heat exchange medium in the edge chamber 511, thereby mitigating the problem that the reliability of a battery is reduced by short circuits in the battery caused by condensation of air moisture into droplets due to the excessively low temperature of the body 5 at the edge chamber 511.

Finally, it should be noted that the foregoing embodiments are only used to describe, but not to limit, the technical solutions of the present application. Although the present application is described in detail with reference to the foregoing embodiments, those skilled in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims and specification of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A heat exchange component, applied to a battery, the heat exchange component comprising:
a body comprising a plurality of chambers extending through the body in a second direction, the plurality of chambers being arranged along a first direction,
wherein the plurality of chambers comprise an edge chamber located at an end of the body in the first direction, and a non-edge chamber located at a side of the edge chamber toward a center of the body, a cross-sectional area of the edge chamber perpendicular to the second direction is smaller than that of the non-edge chamber perpendicular to the second direction, and the first direction intersects with the second direction.

2. The heat exchange component according to claim 1, wherein the cross-sectional area of the edge chamber perpendicular to the second direction is 20% to 70% of the cross-sectional area of the non-edge chamber perpendicular to the second direction.

3. The heat exchange component according to claims 1 or 2, wherein the body comprises a first wall portion and a second wall portion, the second wall portion encloses the non-edge chamber, the first wall portion and a portion of the second wall portion enclose the edge chamber, the first wall portion comprises a side wall and two bottom walls extending in the first direction and connecting the side wall and the second wall portion, and a wall thickness of the side wall is greater than that of the second wall portion.

4. The heat exchange component according to claim 3, wherein the wall thickness of the side wall is greater than or equal to 0.3 mm.

5. The heat exchange component according to claims 3 or 4, wherein at least a portion of the first wall portion is provided with a heat-resistance layer for increasing thermal resistance of the chambers.

6. The heat exchange component according to claim 5, wherein the heat-resistance layer covers the first wall portion and the second wall portion.

7. The heat exchange component according to any one of claims 1 to 6, further comprising:
fluid-collecting devices, wherein two of the fluid-collecting devices are mounted at two ends of the body in the second direction, and the fluid-collecting devices are in communication with at least a portion of the chambers in the second direction, allowing a heat exchange medium to flow into and out of the chambers through the fluid-collecting devices.

8. A box, comprising a heat exchange component according to any one of claims 1 to 7.

9. A battery, comprising:
a box according to claim 8; and
a battery cell accommodated in the box, the heat exchange component being in contact with the battery cell and being used to exchange heat with the battery cell.

10. An electrical apparatus, comprising a battery according to claim 9, the battery being used to provide electrical energy.
